(19) Europäisches Patentamt
European Patent Office
Office européen des brevets

(11) **EP 2 669 006 B1**

(12) **FASCICULE DE BREVET EUROPEEN**

(45) Date de publication et mention
de la délivrance du brevet:
**13.06.2018 Bulletin 2018/24**

(51) Int Cl.:
***B01J 23/74*** (2006.01)    ***B01J 23/75*** (2006.01)
***B01J 23/46*** (2006.01)    ***B01J 23/89*** (2006.01)
***B01J 35/00*** (2006.01)    ***B01J 23/00*** (2006.01)
***B01J 37/02*** (2006.01)    ***B01J 37/18*** (2006.01)
***B01J 37/08*** (2006.01)    ***B01J 21/04*** (2006.01)
***B01J 21/06*** (2006.01)    ***B01J 21/12*** (2006.01)
***C10G 2/00*** (2006.01)

(21) Numéro de dépôt: **13305440.3**

(22) Date de dépôt: **05.04.2013**

(54) **Procédé de préparation d'un catalyseur mettant en oeuvre une étape de séchage rapide, le catalyseur étant utilisable pour la synthèse Fischer-Tropsch**

Verfahren zur Herstellung eines Katalysators, bei dem eine Schnelltrocknungsphase eingesetzt wird, wobei den Katalysator bei der Fischer-Tropsch-Synthese anwendbar ist.

Method for preparing a catalyst using a quick-drying step, the catalyst being useable in Fischer-Tropsch synthesis

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.05.2012 FR 1201543**

(43) Date de publication de la demande:
**04.12.2013 Bulletin 2013/49**

(73) Titulaires:
• **IFP Energies nouvelles**
  **92500 Rueil-Malmaison (FR)**
• **Eni S.p.a.**
  **00144 Rome (IT)**

(72) Inventeurs:
• **MAURY, Sylvie**
  **69440 SAINT MAURICE D'ARGOIRE (FR)**
• **DIEHL, Fabrice**
  **69003 LYON (FR)**
• **BERLIET, Adrien**
  **69004 LYON (FR)**
• **LOPEZ, Joseph**
  **30340 SAINT JULIEN LES ROSIERS (FR)**

(56) Documents cités:
**EP-A1- 2 407 237**    **WO-A2-03/012008**
**WO-A2-2012/020210**    **US-A1- 2005 234 137**

**Description**

Domaine technique

La présente invention concerne le domaine des catalyseurs utilisés pour les réactions de synthèse d'hydrocarbures à partir d'un mélange de gaz comprenant du monoxyde de carbone et de l'hydrogène, généralement appelée synthèse Fischer-Tropsch, et plus particulièrement un procédé de préparation d'un catalyseur comprenant une phase active comprenant au moins un métal du groupe VIII, de préférence le cobalt, et un support oxyde, de préférence silicealumine.

Art antérieur

Il est bien connu de l'Homme du métier que le gaz de synthèse peut être converti en hydrocarbures en présence de catalyseur contenant des métaux du groupe VIII de la classification périodique des éléments tels que le fer, le ruthénium, le cobalt et le nickel qui catalysent la transformation d'un mélange CO et $H_2$ dit gaz de synthèse (c'est-à-dire un mélange de monoxyde de carbone et d'hydrogène) éventuellement dilué par du dioxyde de carbone ou tout autre diluant seul ou en mélange tel que le méthane, l'azote ou l'éthane, en hydrocarbures solides, liquides et gazeux à température ambiante. Ce procédé est connu sous le nom de synthèse Fischer-Tropsch.

Différentes méthodes ont été décrites et développées dans l'art antérieur, pour améliorer la préparation de catalyseurs Fischer-Tropsch à base de cobalt supporté sur différents supports. Les supports les plus utilisés étant l'alumine, la silice et le dioxyde de titane, parfois modifiés par des éléments additionnels.

Le brevet US 6 806 226 décrit par exemple des catalyseurs à base de cobalt. Les catalyseurs Fischer-Tropsch à base de cobalt ainsi décrits présentent cependant l'inconvénient de ne pas avoir une répartition en cobalt homogène ni dans les grains de catalyseur ni à la surface du catalyseur. La mauvaise répartition du cobalt en surface se fait sous forme d'agglomération et d'enrichissement de cobalt en surface et forme une couche externe que l'on appelle également croûte.

En effet, dans le cas de l'utilisation de catalyseur sous forme de particules de granulométrie inférieure à $500\mu m$ dans des procédés type slurry, colonne à bulles (ou slurry bubble column selon la terminologie anglo-saxonne), une répartition homogène et surtout l'absence de croûte est généralement souhaitable. En effet, l'utilisation d'un procédé slurry entraîne un stress mécanique important pour le catalyseur, la répartition du métal actif sous forme d'une croûte le rend plus sensible aux effets de l'attrition et peut causer une perte de métal actif au cours du temps. Une trop forte agrégation du métal à la périphérie du catalyseur peut aussi entraîner une perte de sélectivité liée à des contraintes stériques (cristallites de métal trop fortement agrégées entre elles) limitant la croissance de chaînes hydrocarbonées et dégradant la sélectivité $C_{5+}$ (et par conséquent la probabilité de croissance de chaîne également appelée alpha à partir des travaux théoriques d'Anderson, Schulz et Flory bien connus de l'Homme du métier) lors de la réaction de synthèse d'hydrocarbures.

Les techniques habituelles de préparation de catalyseurs utilisées pour la synthèse Fischer-Tropsch, comprennent en général les étapes suivantes : imprégnation du support, séchage, calcination et réduction éventuelle.

Plusieurs brevets décrivent ainsi des méthodes de préparation des catalyseurs utilisés en synthèse Fischer-Tropsch basées sur ces techniques habituelles et visant à améliorer la répartition du cobalt afin de la rendre plus homogène dans le catalyseur et d'éviter la formation d'une croûte.

Ces dernières années, de nombreux auteurs ont également montré qu'un des paramètres clés gouvernant les performances catalytiques était l'obtention de catalyseurs présentant une taille de cristallites de métal du groupe VIII et de préférence de cobalt, optimale et de préférence comprise entre 6 et 10nm en fonction du support utilisé et des conditions opératoires (Bezemer *et coll.* Cobalt particle size effects in the Fischer-Tropsch reaction studied with carbon nanofiber supported cobalt, JACS 2006, 128, 3956). Les moyens disponibles pour contrôler la taille de ces cristallites et la répartition en taille sont nombreux, il est en effet connu d'utiliser différents précurseurs de cobalt (acétate de cobalt par exemple), différents additifs (glycols..), de sécher sous vide ou de calciner sous différentes atmosphères (calcination sous $NO/O_2$ : WO2007/071899 A1, sous H2 : (Bartholomew *et coll.*, The stoechiometrics of H2 and CO adsorptions on Cobalt : effects of support and préparation J. Catal, 85, 63-77 (1984)).

Un des moyens de contrôler la taille, la répartition en taille des cristallites et également leur niveau d'agrégation peut consister à optimiser les conditions de séchage et de calcination.

Le brevet US 6 806 226 décrit un catalyseur obtenu par une imprégnation sous vide et un séchage partiel sous vide à une température comprise entre 60°C et 95°C, suivi d'une calcination à une température comprise entre 75°C et 400°C avec une rampe de température comprise entre 0,5 °C/min et 1°C/min, pour des vitesses volumiques horaires (vvh) d'au moins 1 $m^3$d'air/(Kg Co$(NO_3)_2$, 6$H_2$O*h). Ce brevet prévoit la possibilité d'une calcination beaucoup plus rapide avec une rampe de température de 100°C/min pour éliminer les nitrates si la vvh est plus élevée.

L'inconvénient de ces techniques est que le catalyseur contient encore beaucoup d'eau à l'issue de l'étape de séchage (un séchage partiel est revendiqué), car toute l'eau apportée par l'imprégnation n'est pas éliminée. La présence de cette eau risque de défavoriser la répartition homogène du cobalt dans et en surface du catalyseur.

Le document EP2 407 237 divulgue un procédé de préparation d'un catalyseur Fischer-Tropsch permettant d'obtenir une distribution uniforme de la phase active dans le support en contrôlant les conditions de séchage.

La présente invention a donc pour objet de pallier un ou plusieurs des inconvénients de l'art antérieur en proposant un procédé de préparation d'un catalyseur comprenant une phase active comprenant au moins un métal du groupe VIII choisi parmi le cobalt, le nickel, le ruthénium et le fer, seul ou en mélange, et un support oxyde pouvant être utilisé dans un procédé de synthèse Fischer-Tropsch, présentant une meilleure activité et une sélectivité maintenue en C5+ dans le procédé de synthèse Fischer-Tropsch due à un meilleur contrôle de la taille moyenne des cristallites d'éléments du groupe VIII et à une meilleure répartition du métal du groupe VIII à l'intérieur des grains de catalyseur et à leur surface, ceci entraînant un abaissement de la quantité de cobalt présent sous forme de croûte extraite facilement du catalyseur par attrition.

En effet, de manière surprenante la demanderesse a découvert qu'une étape de séchage rapide, dans des conditions spécifiques, permettait de mieux contrôler la taille moyenne de cristallites d'oxyde de métal du groupe VIII et en particulier d'oxyde de cobalt ($Co_3O_4$) et le niveau d'agrégation de celles-ci.

Un objectif de la présente invention est donc de fournir un procédé de préparation d'un catalyseur pouvant être utilisé dans un procédé de synthèse Fischer-Tropsch, ledit procédé permettant, grâce à l'utilisation de ce mode de séchage rapide spécifique, l'obtention de catalyseur présentant des cristallites d'éléments d'oxyde du groupe VIII de taille mieux contrôlée et l'amélioration de l'homogénéité du métal du groupe VIII dans et surtout en surface du catalyseur en éliminant totalement la croûte présente en périphérie des grains de catalyseur.

Un autre objectif de la présente invention est de fournir un procédé de préparation permettant l'obtention d'un catalyseur très actif et sélectif dans le procédé de synthèse Fischer-Tropsch.

Résumé de l'invention

Un objet de la présente invention concerne un procédé de préparation d'un catalyseur comprenant une phase active comprenant au moins un métal du groupe VIII choisi parmi le cobalt, le nickel, le ruthénium et le fer, seul ou en mélange, et un support oxyde choisi parmi une alumine ou une silice-alumine, ledit procédé comprenant, au moins une fois, l'enchaînement des étapes suivantes:

- une étape d'imprégnation dudit support oxyde, ladite étape d'imprégnation étant réalisée par au moins une solution contenant au moins un précurseur dudit métal du groupe VIII choisi parmi le cobalt, le nickel, le ruthénium et le fer,

- une étape de séchage dans laquelle ledit support oxyde imprégné, est entrainé au moyen d'un gaz, ledit support oxyde imprégné étant soumis dans ladite étape à une rampe de montée en température comprise entre 250 et 600°C/min, le temps de séjour dudit support oxyde imprégné dans ladite étape de séchage étant compris entre 1 seconde et 1 minute,

- une étape de calcination dudit support oxyde imprégné et séché, ladite étape de calcination étant réalisée à une température comprise entre 320°C et 460°C, et pendant une durée comprise entre 15min et 15h,

de manière à obtenir un catalyseur sous forme oxyde dans lequel le métal du groupe VIII est réparti de manière homogène.

Un avantage du procédé de préparation selon l'invention est de permettre l'obtention de catalyseur présentant une taille moyenne de cristallites de métal du groupe VIII inférieure à 12 nm.

L'intérêt de l'invention réside dans la mise en oeuvre d'une étape de séchage spécifique, appelée étape de séchage rapide, indépendante de l'étape de calcination, et mise en oeuvre après l'étape d'imprégnation ou de chacune des étapes d'imprégnation du procédé de préparation selon l'invention. En effet, la mise en oeuvre de ladite étape de séchage permet d'éviter la migration du métal du groupe VIII et de préférence du cobalt en surface des grains du support ce qui formerait une croûte et évite également la formation d'agrégats du métal du groupe VIII et de préférence du cobalt au sein des grains de catalyseur.

Ainsi, ladite étape de séchage rapide, mise en oeuvre avant l'étape de calcination, dans le procédé de préparation selon l'invention permet, à la fois un séchage très efficace, et d'éviter la formation de croûte de métal du groupe VIII, et de préférence de cobalt à la surface des particules du catalyseur ainsi préparé, et ainsi d'améliorer la répartition du métal du groupe VIII, et de préférence du cobalt à l'intérieur des particules de catalyseur. Il est également décrit un procédé de synthèse Fischer-Tropsch à partir d'un mélange de monoxyde de carbone et d'hydrogène, mettant en oeuvre un catalyseur préparé selon ledit procédé de préparation selon l'invention, ledit procédé de synthèse Fischer Tropsch opérant à une température comprise entre 190 et 240°C, à une pression totale comprise entre 1 et 5 MPa et avec un rapport molaire $H_2/CO$ compris entre 1,5 et 2,5.

Description de l'invention

Conformément à l'invention, le procédé de préparation d'un catalyseur comprenant une phase active comprenant au moins un métal du groupe VIII choisi parmi le cobalt, le nickel, le ruthénium et le fer, seul ou en mélange, et un support oxyde choisi parmi une alumine ou une silice-alumine, ledit procédé comprenant, au moins une fois, l'enchainement des étapes suivantes :

- une étape d'imprégnation dudit support oxyde, ladite étape d'imprégnation étant réalisée par au moins une solution contenant au moins un précurseur dudit métal du groupe VIII choisi parmi le cobalt, le nickel, le ruthénium et le fer,

- une étape de séchage dans laquelle ledit support oxyde imprégné, est entrainé au moyen d'un gaz, ledit support oxyde imprégné étant soumis dans ladite étape à une rampe de montée en température comprise entre 250 et 600°C/min, le temps de séjour dudit support oxyde imprégné dans ladite étape de séchage étant compris entre 1 seconde et 1 minute,

- une étape de calcination dudit support oxyde imprégné et séché, ladite étape de calcination étant réalisée à une température comprise entre 320°C et 460°C, et pendant une durée comprise entre 15min et 15h,

de manière à obtenir un catalyseur sous forme oxyde dans lequel le métal du groupe VIII est réparti de manière homogène.

Dans toute la suite du texte, on entend par séchage, une étape de traitement thermique permettant d'obtenir un solide de perte au feu (PAF) à 1000°C comprise entre 7 et 20% et n'entraînant pas la formation d'oxyde de cobalt cristallisé détectable par diffraction des rayons X.

On entend par calcination, une étape de traitement thermique permettant la décomposition totale des nitrates et la transformation de tous les contre-ions de sels métalliques du métal du groupe VIII (par exemple pour le cobalt le précurseur $Co(NO_3)_2$) en oxydes de cobalt.

Selon l'invention, le catalyseur préparé selon le procédé selon l'invention comprend une phase métallique active comprenant au moins un métal du groupe VIII choisi parmi le cobalt, le nickel, le ruthénium et le fer, seul ou en mélange. De manière très préférée, la phase active comprend du cobalt. Ladite phase active est avantageusement déposée sur un support oxyde. Dans le cas où la phase active comprend au moins un métal du groupe VIII choisi parmi le cobalt, le nickel, le ruthénium et le fer, la teneur en métal du groupe VIII est avantageusement comprise entre 1 et 60 % poids par rapport au poids du catalyseur, de préférence entre 5 et 30 % poids par rapport au poids du catalyseur et de manière très préférée entre 10 et 30% poids par rapport au poids du catalyseur. Dans le cas où la phase active comprend du ruthénium, la teneur en ruthénium métallique est comprise entre 0,01 et 10% poids par rapport au poids du catalyseur et de manière très préférée entre 0,05 et 0,5% poids par rapport au poids du catalyseur. La phase active du catalyseur préparé selon le procédé selon la présente invention comprend également de manière avantageuse au moins un métal additionnel choisi parmi le platine, le palladium, le rhénium, le ruthénium, le manganèse et le tantale et de manière très préférée choisi parmi le platine, le ruthénium et le rhénium. Le(s) métal(ux) additionnel(s) est(sont) préférentiellement présent(s) en une teneur présentant de 0,01 à 2 % poids, de préférence de 0,02 à 0,3 % poids de métal par rapport au poids du catalyseur.

Le support oxyde du catalyseur préparé selon le procédé selon la présente invention sur lequel est déposée la phase active est choisi parmi une alumine ($Al_2O_3$) ou de la silice et de l'alumine. De manière très préférée ledit support oxyde est constitué de silice-alumine. Dans ce cas, ledit support constitué de silice-alumine comprend préférentiellement de 1 à 30% poids de silice par rapport au poids total dudit support. La silice-alumine est homogène à l'échelle du micromètre, et de manière préférée, homogène à l'échelle du nanomètre.

Conformément à l'invention, l'enchainement des étapes d'imprégnation, de séchage et de calcination est réalisé au moins une fois.

De préférence, l'enchainement desdites étapes d'imprégnation, de séchage et de calcination est réalisé dans cet ordre.

Le nombre d'enchainements dépendant de la teneur finale en élément du groupe VIII désirée et du volume poreux initial du support oxyde utilisé, ledit enchainement d'étapes peut être réalisé autant de fois que nécessaire.

Le procédé de préparation selon l'invention peut éventuellement comprendre une étape de stabilisation dudit support oxyde de manière à former une structure spinelle entre un métal choisi parmi le cobalt, le nickel, le magnésium, le calcium et le zinc et le support oxyde, ladite étape de stabilisation étant réalisée avant l'enchainement des étapes d'imprégnation, de séchage et de calcination, ladite étape de stabilisation dudit support oxyde consiste :

- en l'imprégnation, de préférence à sec, dudit support oxyde, de manière préférée, par une solution aqueuse d'un ou plusieurs sels d'un métal choisi parmi le cobalt, le nickel, le magnésium, le calcium et le zinc de manière à imprégner une teneur en métal compris entre 1 et 10 % poids par rapport à la masse totale du catalyseur final,

- le séchage dudit support oxyde imprégné,

- la calcination dudit support oxyde imprégné et séché, ladite calcination étant réalisée en une étape, sous air, à une température comprise entre 700 et 1200°C, pendant une durée comprise entre une heure et 24h, ou en deux étapes, à une température comprise entre 300°C et 600°C sous air pendant une durée comprise entre une demi-heure et trois heures, puis à une température comprise entre 700°C et 1200°C, pendant une durée comprise entre une heure et 24 heures.

Dans un mode de réalisation préféré de l'étape de stabilisation, le séchage dudit support oxyde imprégné est avantageusement réalisé à une température comprise entre 60°C et 200°C pendant une durée comprise entre une demi-heure et trois heures. Dans ce cas, l'étape de stabilisation est avantageusement réalisée dans un outil parmi les exemples suivants : lit fluidisé, four tournant, étuve ventilée, lit fixe etc...

Dans un autre mode de réalisation préféré de l'étape de stabilisation, ledit support oxyde imprégné subit une étape de séchage rapide selon l'invention. De préférence, ledit support oxyde imprégné est entrainé au moyen d'un gaz, ledit support oxyde imprégné étant soumis à une rampe de montée en température comprise entre 250 et 500°C/min, le temps de séjour dudit support oxyde imprégné dans ladite étape de séchage étant compris entre 1 seconde et 1 minute. Les conditions opératoires dudit séchage sont décrites plus précisément plus bas. Dans ce cas, ladite étape de stabilisation est avantageusement réalisée dans le même outil que le ou les enchainement(s) des étapes d'imprégnation, de séchage et de calcination du procédé de préparation selon l'invention.

Dans le cas où la calcination dudit support oxyde imprégné et séché est réalisée en une étape, ladite calcination est avantageusement réalisée sous air, à une température comprise entre 700 et 1200°C , de préférence comprise entre 850 et 1200°C et de manière préférée entre 850 et 900°C, pendant une durée comprise entre une heure et 24h.

Dans le cas où la calcination dudit support oxyde imprégné et séché est réalisée en deux étapes, ladite calcination est avantageusement réalisée à une température comprise entre 300°C et 600°C sous air pendant une durée comprise entre une demi-heure et trois heures, puis à une température comprise entre 700°C et 1200°C, de préférence comprise entre 850 et 1200°C et de manière préférée entre 850 et 900°C, pendant une durée comprise entre une heure et 24 heures, et de préférence comprise entre 2 heures et 5 heures.

A l'issue de ladite étape de stabilisation, ledit support oxyde sur lequel est déposé la phase active comprend une spinelle incluse dans une alumine ou une silice-alumine, de préférence dans une silice-alumine. En particulier, le support oxyde du catalyseur est avantageusement constitué d'une spinelle simple, incluse dans une silice-alumine, de type $MAl_2O_4/Al_2O_3.SiO_2$ ou d'une spinelle mixte, incluse dans une silice-alumine, de type $M_xM'_{(1-x)}Al_2O_4/Al_2O_3.SiO_2$ où M et M' sont des métaux distincts choisis dans le groupe constitué par le magnésium (Mg), le cobalt (Co), le nickel (Ni), le zinc (Zn), le calcium (Ca), où $Al_2O_3.SiO_2$ désigne la formule chimique d'une silice-alumine, où x est compris entre 0 et 1, les valeurs 0 et 1 étant elles-mêmes exclues.

Ledit support oxyde stabilisé obtenu et formé d'une structure spinelle comprend avantageusement au moins 5% poids de ladite structure spinelle, de manière préférée au moins 10% poids, et de manière encore plus préférée au moins 15 % poids par rapport au poids total dudit support. La silice-alumine dans laquelle est préférentiellement incluse la structure spinelle comprend préférentiellement de 1 à 30% poids de silice par rapport au poids total dudit support. Elle est homogène à l'échelle du micromètre, et de manière encore plus préférée, homogène à l'échelle du nanomètre.

Ladite étape de stabilisation permet de limiter les attaques du milieu réactionnel de synthèse Fischer-Tropsch (eau, acides). A l'issue de ladite étape de stabilisation, le métal du groupe VIII, et de préférence le cobalt ainsi ajouté, a une très forte interaction avec le support oxyde, et n'est donc pas réductible dans le domaine de réduction des catalyseurs Fischer-Tropsch bien connu de l'Homme du métier (température de réduction inférieure à 550°C)

Selon un mode préféré de réalisation, l'enchainement des étapes d'imprégnation, de séchage et de calcination, de préférence dans cet ordre, est réalisé au moins 2 fois. Dans ce cas, le procédé de préparation selon l'invention comprend donc après chaque étape d'imprégnation, une étape de séchage, indépendante de l'étape de calcination.

Ladite étape d'imprégnation du support oxyde, éventuellement stabilisé, est avantageusement réalisée par au moins une solution contenant au moins un précurseur dudit métal du groupe VIII choisi parmi le cobalt, le nickel, le ruthénium et le fer. En particulier, ladite étape peut avantageusement être réalisée par imprégnation à sec, par imprégnation en excès, ou encore par dépôt - précipitation selon des méthodes bien connues de l'Homme du métier. De manière préférée, ladite étape d'imprégnation est réalisée par imprégnation à sec, de préférence à température ambiante, et de manière préférée à une température égale à 20°C. Ladite étape d'imprégnation consiste à mettre en contact ledit support oxyde avec au moins une solution, contenant au moins un précurseur dudit métal du groupe VIII, dont le volume est égal au volume poreux dudit support à imprégner. Cette solution contient les précurseurs métalliques du ou des métaux du groupe VIII à la concentration voulue pour obtenir sur le catalyseur final la teneur en métal visée. Ladite étape d'imprégnation peut également avantageusement être réalisée à toute autre température compatible avec cette technique, de préférence entre 5°C et 40°C, de manière préférée entre 15°C et 25°C, et de manière très préférée entre 17°C et 23°C.

Selon le mode préféré de réalisation dans lequel l'enchainement des étapes d'imprégnation, de séchage et de calcination, de préférence dans cet ordre, est réalisé 2 fois, la première étape d'imprégnation dudit support oxyde éventuellement stabilisé, permet le dépôt de 2 à 15% poids et de préférence de 5 à 10% poids d'au moins un métal du groupe VIII choisi parmi le cobalt, le fer et le ruthénium et de préférence le cobalt, par rapport à la masse totale du catalyseur final. La deuxième étape d'imprégnation dudit support oxyde éventuellement stabilisé, permet le dépôt de 2 à 15% poids et de préférence de 5 à 10% poids d'au moins un métal du groupe VIII choisi parmi le cobalt, le fer et le ruthénium et de préférence le cobalt, par rapport à la masse totale du catalyseur final. Dans le cas où l'élément du groupe VIII est le cobalt, lesdites deux étapes d'imprégnation permettent le dépôt d'une teneur en cobalt métallique pouvant être comprise entre 4 et 30 % poids et de préférence entre 10 et 20% poids par rapport à la masse totale du catalyseur final.

Le métal ou les métaux du groupe VIII sont mis au contact du support oxyde éventuellement stabilisé par l'intermédiaire de tout précurseur métallique soluble en phase aqueuse ou en phase organique. Lorsqu'il est introduit en solution organique, le précurseur du métal du groupe VIII est de préférence l'oxalate ou l'acétate dudit métal du groupe VIII. De manière préférée, le précurseur du métal du groupe VIII est introduit en solution aqueuse, de préférence sous forme de nitrate, de carbonate, d'acétate, de chlorure, d'oxalate, de complexes formés par un polyacide ou un acide-alcool et ses sels, de complexes formés avec les acétylacétonates, ou de tout autre dérivé inorganique soluble en solution aqueuse, laquelle est mise en contact avec ledit support. Dans le cas préféré où le métal du groupe VIII est le cobalt, le précurseur de cobalt avantageusement utilisé est le nitrate de cobalt, l'oxalate de cobalt ou l'acétate de cobalt.

Ladite étape d'imprégnation du support oxyde, éventuellement stabilisé, du catalyseur préparé selon l'invention, peut également avantageusement comprendre au moins une étape supplémentaire consistant à déposer au moins un métal additionnel choisi parmi le platine, le palladium, le rhénium, le rhodium, le ruthénium, le manganèse et le tantale, seul ou en mélange, sur ledit support oxyde. De manière préférée, le métal additionnel est choisi parmi le platine, le ruthénium et le rhénium et de manière très préférée, le métal additionnel est le platine. Le dépôt du métal additionnel sur le support peut avantageusement être réalisé par toute méthode connue de l'Homme du métier, préférentiellement par imprégnation dudit support oxyde par au moins une solution contenant au moins un précurseur dudit métal additionnel, et de préférence, par imprégnation à sec ou par imprégnation en excès. Le(s) métal(ux) additionnel(s) est(sont) préférentiellement présent(s) en une teneur présentant de 0,01 à 2 % poids, de préférence de 0,02 à 0,3 % poids de métal par rapport au poids du catalyseur.

Selon l'invention, une étape de séchage, appelée étape de séchage rapide, dudit support oxyde imprégné et éventuellement préalablement stabilisé, est mise en oeuvre entre l'étape d'imprégnation et l'étape de calcination.

Dans ladite étape de séchage, ledit support oxyde imprégné, est entrainé au moyen d'un gaz, ledit support oxyde imprégné étant soumis à une rampe de montée en température comprise entre 250 et 600°C/min, de préférence entre 300 et 600°C/min, de manière préférée entre 350 et 600°C/min, de manière plus préférée entre 350 et 550°C/min, le temps de séjour dudit support oxyde imprégné dans ladite étape de séchage étant compris entre 1 seconde et 1 minute, de préférence entre 5 et 40 secondes et de manière préférée entre 5 et 30 secondes.

Ladite étape de séchage est appelée étape de séchage rapide car le mode de séchage utilisé permet d'atteindre un très faible temps de contact entre le catalyseur et le gaz sous un débit de gaz très élevé permettant d'éliminer l'eau très rapidement.

De préférence, le gaz utilisé dans ladite étape de séchage est de l'air, seul ou en mélange avec un gaz inerte.

De préférence, la température du gaz en entrée de ladite étape de séchage est comprise entre 300 et 800°C, de manière préférée entre 350 et 700°C et de manière très préférée entre 400 et 550°C.

De préférence, la pression au cours de ladite étape de séchage est comprise entre 0,02 et 0,2 MPa et de manière préférée entre 0,05 et 0,1MPa.

De préférence, ladite étape de séchage opère en présence d'un débit de gaz compris entre 2 et 4 Nl/h/g de catalyseur, de manière préférée entre 2,6 et 3,2 Nl/h/g de catalyseur.

Pendant ladite étape de séchage, la température du support oxyde imprégné et entrainé dans ladite étape de séchage est comprise entre 50 et 60°C dans le domaine préféré de température et de débit.

Le séchage est une étape importante dans la préparation du catalyseur selon l'invention. Les étapes d'imprégnation, de séchage, et de calcination sont réalisées indépendamment l'une de l'autre.

Ladite étape de séchage permet de traiter une poudre de support oxyde imprégné, et éventuellement stabilisé, présentant une granulométrie inférieure à 200 $\mu$m et une perte au feu, PAF, comprise entre 20 et 50% à l'issue de l'étape d'imprégnation. A l'issue de l'étape de séchage, ledit support oxyde imprégné et séché se présente sous la forme d'une poudre présentant une granulométrie inférieure à 200 $\mu$m et une perte au feu mesurée à 1000°C, (PAF à 1000°C), comprise entre 7 et 20%.

Ladite étape de séchage est avantageusement réalisée dans tout outil connu de l'homme du métier permettant de traiter une poudre de PAF comprise entre 20 et 50% de granulométrie inférieure à 300 $\mu$m et d'atteindre un très faible temps de contact sous un débit d'air très élevé, et à une température élevée. De préférence, dans un outil choisi parmi les lits entrainés et les sécheurs flash ou dans tous outils équivalents connu de l'homme du métier. Les sécheurs flash sont notamment très utilisés dans le domaine de l'agroalimentaire et sont commercialisés par des sociétés comme Barr-Rosin, Niro mais peuvent avantageusement être utilisés comme sécheur dans la présente invention.

Ladite étape de séchage rapide, indépendante de l'étape de calcination, et mise en oeuvre après ladite étape d'imprégnation ou chaque étape d'imprégnation du procédé de préparation selon l'invention, permet d'éviter la migration en surface du métal du groupe VIII et de préférence du cobalt, et évite également la formation d'agrégats du métal du groupe VIII et de préférence du cobalt au sein des grains de catalyseur obtenu.

Ainsi, ladite étape de séchage rapide, mise en oeuvre avant l'étape de calcination, dans le procédé de préparation selon l'invention permet, à la fois un séchage très efficace, et d'éviter la formation de croûte de métal du groupe VIII, et de préférence de cobalt à la surface des particules du catalyseur ainsi préparé, et ainsi d'améliorer la répartition du métal du groupe VIII, et de préférence du cobalt à l'intérieur des particules de catalyseur.

Selon l'invention, une étape de calcination dudit support oxyde imprégné et séché est mise en oeuvre après l'étape d'imprégnation. Ladite étape de calcination est avantageusement réalisée indépendamment de l'étape de séchage rapide. De préférence, ladite étape de calcination est réalisée dans un outil choisi parmi une étuve ventilée, un lit fluidisé et un four tournant ou dans tous outils équivalents connu de l'homme du métier.

Ladite étape de calcination est réalisée à une température comprise entre 320°C et 460°C, de préférence entre 350 et 440°C et de manière préférée entre 360 et 420°C.

Elle est réalisée pendant une durée comprise entre 15 min et 15h et de préférence entre 30 min et 12h et de manière encore plus préférée entre 1h et 6h.

Le catalyseur obtenu à l'issue du procédé de préparation selon la présente invention se trouve sous forme oxyde après l'enchainement des étapes d'imprégnation, séchage et calcination, réalisé au moins uns fois. Il présente des cristallites d'oxyde du métal du groupe VIII, présent dans la phase active du catalyseur, préférentiellement des cristallites d'oxyde de cobalt $Co_3O_4$.

Le procédé de préparation selon l'invention peut également avantageusement comprendre au moins une étape de réduction du catalyseur obtenu, ladite étape de réduction étant réalisée après l'enchainement des étapes d'imprégnation, séchage et calcination.

En effet, préalablement à son utilisation dans un réacteur catalytique pour la synthèse Fischer Tropsch, ledit catalyseur obtenu à l'issue du procédé selon la présente invention subit de préférence au moins une étape de réduction. Ladite étape de réduction est destinée à activer le catalyseur et à former des particules de métal à l'état zéro valent et est par exemple réalisée sous hydrogène, pur ou dilué, à haute température.

Lorsque le métal du groupe VIII utilisé est le cobalt, l'étape de réduction permet de réaliser la réaction suivante:

$$Co_3O_4 \rightarrow CoO \rightarrow Co(0)$$

Ladite étape de réduction opère avantageusement à une température comprise entre 200 et 500 °C et pendant une durée comprise entre 2 et 20 heures.

Ladite étape de réduction est avantageusement effectuée soit *in situ*, c'est-à-dire dans le même réacteur que celui où est opéré la réaction de Fischer-Tropsch, soit *ex situ* avant d'être chargé dans le réacteur.

Le catalyseur obtenu à l'issue du procédé de préparation selon la présente invention comprend une phase métallique active comprenant au moins un métal du groupe VIII choisi parmi le cobalt, le nickel, le ruthénium et le fer, seul ou en mélange, et un support oxyde tel que défini plus haut.

Le support oxyde sur lequel est déposé la phase active peut avantageusement présenter une morphologie sous forme de poudre de granulométrie variable, notamment lorsque le catalyseur est mis en oeuvre dans un réacteur de type colonne à bulles (ou "slurry bubble column" selon la terminaison anglo-saxonne). La taille des grains du catalyseur peut avantageusement être comprise entre quelques microns et quelques centaines de microns. Pour une mise en oeuvre en réacteur "slurry", la taille des particules du catalyseur préparé selon le procédé selon la présente invention est préférentiellement comprise entre 10 microns et 300 microns et de manière très préférée entre 20 et 200 microns.

Le catalyseur obtenu à l'issue du procédé de préparation selon la présente invention catalyseur présentant une taille moyenne de cristallites de métal du groupe VIII inférieure à 12 nm.

Ledit catalyseur ainsi obtenu comporte des grains dans lesquels le métal du groupe VIII et de préférence le cobalt, est réparti de manière homogène dans les grains et à leur surface, lesdits grains présentant pas ou peu d'agrégats de métal du groupe VIII, la formation de croûte en périphérie desdits grains de catalyseur étant limitée.

La répartition du métal du groupe VIII et de préférence du cobalt à l'intérieur des grains de catalyseur obtenu par le procédé selon l'invention, ainsi que la présence ou l'absence d'une couche de métal de groupe VIII et de préférence du cobalt également appelée croûte se détecte par exemple par microanalyse X par sonde électronique ou par microscopie électronique à balayage en électrons rétrodiffusés (MEB).

Le catalyseur obtenu à l'issue du procédé de préparation selon la présente invention peut avantageusement être utilisé dans des réactions mises en oeuvre en suspension dans un réacteur fluidisé triphasique, préférentiellement de type colonne à bulles. Dans cette mise en oeuvre préférée du catalyseur, ledit catalyseur est divisé à l'état de poudre très fine, particulièrement de l'ordre de quelques dizaines de microns et par exemple entre 5 microns et 300 microns, préférentiellement entre 20 microns et 150 microns, et de manière encore plus préférée entre 20 et 120 microns. Cette technologie est également connue sous la terminologie de procédé "slurry" par l'Homme du métier.

Ledit catalyseur peut également avantageusement être utilisé dans différents types de réacteurs, et par exemple en lit fixe, en lit mobile, en colonne à bulle ou encore en lit fluidisé triphasique. Il est également décrit un procédé de synthèse Fischer-Tropsch à partir d'un mélange de carbone et d'hydrogène, mettant en oeuvre un catalyseur préparé selon ledit procédé de préparation selon l'invention, ledit procédé de synthèse Fischer Tropsch opérant à une température comprise entre 190 et 240°C, à une pression totale comprise entre 1 et 5 MPa et avec un rapport molaire $H_2/CO$ compris entre 1,5 et 2,5.

L'invention est illustrée par les exemples qui suivent.

*Exemple 1 (comparatif) :*

Un catalyseur A1 comprenant du cobalt déposé sur un support de silice alumine est préparé par imprégnation à sec d'une solution aqueuse de nitrate de cobalt de manière à déposer en deux étapes successives de l'ordre de 14% poids de Co sur une poudre commerciale de silice alumine (SIRALOX® 5/170, SASOL) de granulométrie moyenne égale à 80 $\mu$m, de surface 171 m2/g et de volume poreux égal à 0,519 ml/g.

Après une première imprégnation à sec, le solide est séché en étuve à 120°C pendant 3h sous flux d'air de débit non contrôlé. La température est ensuite montée à 420°C en suivant une rampe de 1°C/min sous un débit d'air non contrôlé, puis un palier de 420°C est maintenu pendant 4h. Le catalyseur intermédiaire contient environ 8% poids de Co. Il est soumis à une deuxième étape d'imprégnation à sec au moyen d'une solution de nitrate de cobalt. Le solide obtenu est séché en étuve à 120°C pendant 3h sous flux d'air de débit non contrôlé. La calcination est ensuite réalisée à une température de 420°C en suivant une rampe de 1°C/min sous un débit d'air non contrôlé puis un palier de 420°C est maintenu pendant 4h. On obtient le catalyseur final A1 qui contient 13,5% poids de Co.

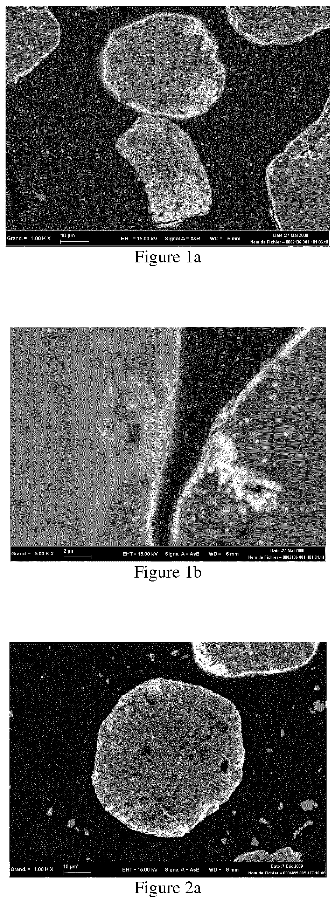

La microscopie électronique à balayage en électrons rétrodiffusés (figure 1) met en évidence la présence de croûte (figure 1a) et une mauvaise répartition du cobalt au sein des grains de catalyseur (figure 1b).

La taille moyenne de cristallites de $Co_3O_4$ mesurée par DRX est de 19nm.

La PAF à 1000°C du solide A1 est de 13%

La teneur en $Co_3O_4$ mesurée par DRX présente dans le catalyseur à l'issue de l'étape de séchage est d'environ 3,5% en pds par rapport à la masse totale de l'échantillon.

La teneur en $Co_3O_4$ dans le solide à l'issue de l'étape de séchage est déterminée par DRX. L'aire des raies du $Co_3O_4$ à 36.9° (raie principale) et 59.3° a été mesurée. Une droite d'étalonnage est réalisée à l'aide d'échantillons référence contenant 0 et 1 00% de $Co_3O_4$, ce qui permet d'évaluer la teneur en $Co_3O_4$ dans un échantillon donné.

*Exemple 2 comparatif :*

Un catalyseur A2 comprenant du cobalt déposé sur un support de silice alumine est préparé par imprégnation à sec d'une solution aqueuse de nitrate de cobalt de manière à déposer en deux étapes successives de l'ordre de 13,5% poids de Co sur une poudre de silice alumine (SIRALOX 5/170, SASOL) de granulométrie moyenne égale à 80 $\mu$m, de surface 171 m2/g et de volume poreux égal 0,519 ml/g.

Après une première imprégnation à sec, le solide est séché dans un lit entrainé sous un débit d'air sec en suivant une rampe de 230°C/min sous un débit d'air de 2,11 Nl/h/g de catalyseur, pendant 15s sous flux d'air. Le catalyseur est ensuite déchargé, puis introduit dans une étuve ventilée. La température est montée à 420°C en suivant une rampe de 1°C/min sous un débit d'air non contrôlé puis un palier de 420°C est maintenu pendant 4h. Le catalyseur intermédiaire contient environ 8% poids de Co. Il est soumis à une deuxième étape d'imprégnation à sec au moyen d'une solution de nitrate de cobalt. Le solide humide est séché dans un lit entrainé sous un débit d'air sec en suivant une rampe de 240°C/min sous un débit d'air de 2,11l/(h.g de catalyseur), pendant 15s sous flux d'air. Le catalyseur est ensuite déchargé, puis introduit dans une étuve ventilée. La calcination est ensuite réalisée à une température de 420°C en suivant une rampe de 1°C/min sous un débit d'air non contrôlé puis un palier de 420°C est maintenu pendant 4h. On obtient le catalyseur final A2 qui contient 13,5% poids de Co.

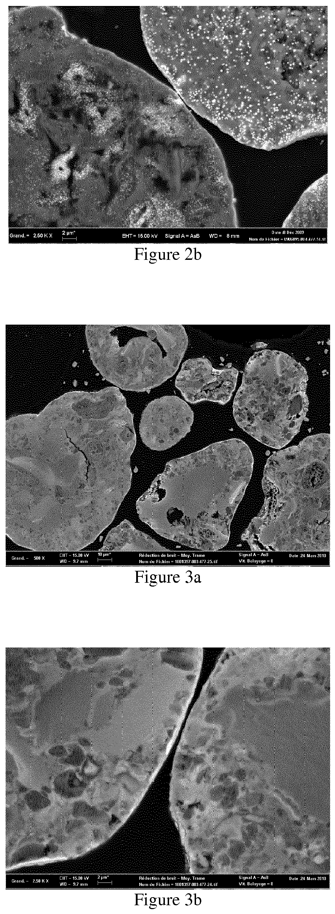

La microscopie électronique à balayage en électrons rétrodiffusés (figure 2) met en évidence la présence de croûte (figure 2a) et une mauvaise répartition du cobalt au sein des grains de catalyseur (figure 2b).

La taille moyenne de cristallites de $Co_3O_4$ mesurée par DRX est de 22nm.

La PAF à 1000°C du solide A2 est de 22%.

Aucune trace de $Co_3O_4$ n'est détectée par DRX.

8

*Exemple 3 (selon l'invention) :*

Un catalyseur A3 comprenant du cobalt déposé sur un support de silice alumine est préparé par imprégnation à sec d'une solution aqueuse de nitrate de cobalt de manière à déposer en deux étapes successives de l'ordre de 13,5% poids de Co sur une poudre commerciale de silice alumine (SIRALOX® 5/170, SASOL) de granulométrie moyenne égale à 80 $\mu$m, de surface 171 m$^2$/g et de volume poreux égal 0,519 ml/g.

Après une première imprégnation à sec, le solide est séché dans un lit entrainé sous un débit d'air en suivant une rampe de 360°C/min sous un débit d'air de 2,63 Nl/h/g de catalyseur, pendant 10s sous flux d'air. Le catalyseur est ensuite déchargé, puis introduit dans une étuve ventilée. La température est montée à 420°C en suivant une rampe de 1°C/min et sous un débit d'air non contrôlé puis un palier de 420°C est maintenu pendant 4h. Le catalyseur intermédiaire contient environ 8% poids de Co. Il est soumis à une deuxième étape d'imprégnation à sec au moyen d'une solution de nitrate de cobalt. Le solide humide est séché dans un lit entrainé sous un débit d'air en suivant une rampe de 360°C/min sous un débit d'air de 2,63 Nl/h/g de catalyseur, pendant 10s sous flux d'air. Le catalyseur est ensuite déchargé, puis introduit dans une étuve ventilée. La calcination est ensuite réalisée à une température de 420°C en suivant une rampe de 1°C/min sous un débit d'air non contrôlé puis un palier de 420°C est maintenu pendant 4h. On obtient le catalyseur final A3 qui contient 13,5% poids de Co.

La microscopie électronique à balayage en électrons rétrodiffusés (figure 3) met en évidence l'absence de croûte (figure 3a) et l'absence d'agrégats de cobalt au sein du grain de catalyseur (bonne répartition du cobalt) au sein des grains de catalyseur (figure 3b).

La taille moyenne de cristallites de $Co_3O_4$ mesurée par DRX est de 12nm.

La PAF à 1000°C du solide A3 est de 10%

Aucune trace de $Co_3O_4$ n'est détectée par DRX.

*Exemple 4 (selon l'invention) :*

Plusieurs catalyseurs sont préparés de manière identique au catalyseur de l'exemple 3 à la différence près que l'on fait varier la température d'entrée du gaz dans l'étape de séchage entre 400 et 550°C.

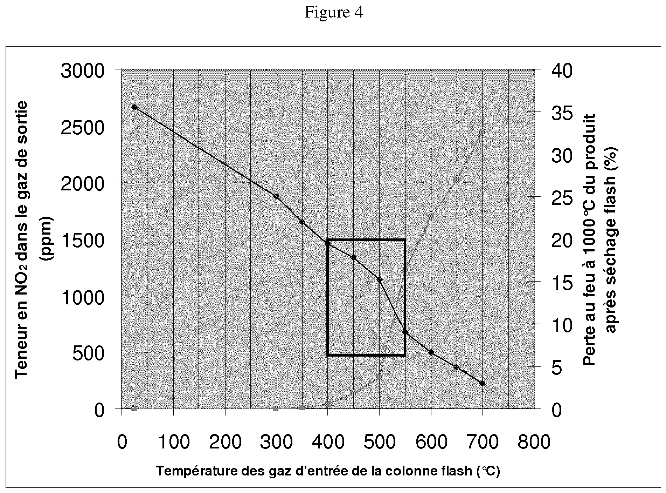

La Figure 4 représente l'évolution de la PAF à 1000°C en sortie de séchage et de la teneur en $NO_2$ dans le gaz de sortie de la colonne flash de l'étape de séchage en fonction de la température des gaz d'entrée dans l'étape de séchage, pour des catalyseurs préparés selon l'exemple 3 avec 13,5% poids de Co. Pour différente températures de gaz d'entrée un prélèvement de catalyseur a été effectué ce qui a permis de déterminer la perte au feu résiduelle après séchage. Le domaine encadré correspond à des catalyseurs du domaine préféré pour lequel on obtient une très bonne répartition du cobalt dans les grains de catalyseur tout en ne décomposant pas de façon importante les nitrates présents. La présence de $NO_2$, est, sans que cela soit relié à une quelconque théorie, liée à la fraction superficielle des grains de catalyseurs au contact du gaz chaud de séchage.

*Exemple 5*

Les catalyseurs A1, A2 et A3, avant d'être successivement testés en conversion du gaz de synthèse, sont réduits *ex situ* sous un flux d'hydrogène pur à 400°C pendant 16 heures en réacteur tubulaire. Une fois le catalyseur réduit, il est déchargé sous atmosphère d'argon et enrobé dans de la Sasolwax® pour être stocké à l'abri de l'air avant test. La réaction de synthèse Fischer-Tropsch est opérée dans un réacteur de type slurry et fonctionnant en continu et opérant avec une concentration de 10% (vol) de catalyseur en phase slurry..

Chacun des catalyseurs se trouve sous forme de poudre de diamètre compris entre 40 et 150 microns. Les conditions de test sont les suivantes:

Température = 230°C
Pression totale = 2MPa
Rapport molaire $H_2$/CO = 2
Conversion du CO maintenue entre 45 et 50%

Les conditions de test sont ajustées de façon à être à iso conversion de CO quelle que soit l'activité du catalyseur.

L'activité est calculée de la façon suivante :

$$\text{Activité} = \exp\left(\frac{-E}{RT_{base}}\right) . \exp\left(\frac{E}{RT_{ref}}\right)$$

avec $T_{base}$=225°C
E= énergie d'activation
R=constante des gaz parfaits
$T_{ref}$ = T d'un catalyseur de référence

Pour un catalyseur de référence, l'activité est de 100%, la température de référence est alors égale à la température de base,

Les résultats sont calculés pour les catalyseurs A1, A2 et A3 par rapport au catalyseur de référence d'activité 100% et figurent dans le tableau 1 ci-dessous. Les sélectivités alpha paraffines sont aussi données ainsi que la sélectivité en composés $C_{5+}$.

La mesure de la sélectivité en alpha paraffine se fait via une analyse par chromatographie en phase gazeuse des effluents de la réaction, dosage des paraffines et calcul de la pente de la courbe log mol (%) = f(nombre de carbone) qui correspond au alpha.

| Catalyseur | A1 | A2 | A3 |
|---|---|---|---|
| PAF à 1000°C après séchage (%) | 13% | 22% | 10% |
| $CO_3O_4$ après séchage par DRX (%) | 3.5 | 0 | 0 |
| activité après 300h (%) | 230 | 230 | 300 |
| sélectivité C5+ (%) | 80 | 79 | 82 |
| séléctivité alpha paraffines | 0.878 | 0.872 | 0.892 |

L'activité du catalyseur A3 selon l'invention est améliorée de 70 points par rapport à l'activité des catalyseurs A1 et A2 (300% par rapport à 230%). Sa sélectivité $C_{5+}$, alpha paraffines et est elle aussi meilleure que celle du catalyseur A1 et du catalyseur A2. Le procédé selon l'invention permet ainsi d'obtenir un catalyseur, avec très peu de croûte (non visible en MEB) et pas d'agrégats, à la fois plus actif et plus sélectif.

## Revendications

1. Procédé de préparation d'un catalyseur comprenant une phase active comprenant au moins un métal du groupe VIII choisi parmi le cobalt, le nickel, le ruthénium et le fer, seul ou en mélange, et un support oxyde choisi parmi une alumine ou une silice-alumine, ledit procédé comprenant, au moins une fois, l'enchainement des étapes suivantes:

   - une étape d'imprégnation dudit support oxyde, ladite étape d'imprégnation étant réalisée par au moins une solution contenant au moins un précurseur dudit métal du groupe VIII choisi parmi le cobalt, le nickel, le ruthénium et le fer,
   - une étape de séchage dans laquelle ledit support oxyde imprégné, est entrainé au moyen d'un gaz, ledit support oxyde imprégné étant soumis dans ladite étape à une rampe de montée en température comprise entre 250 et 600°C/min, le temps de séjour dudit support oxyde imprégné dans ladite étape de séchage étant compris entre 1 seconde et 1 minute,
   - une étape de calcination dudit support oxyde imprégné et séché, ladite étape de calcination étant réalisée à une température comprise entre 320°C et 460°C, et pendant une durée comprise entre 15min et 15h,

   de manière à obtenir un catalyseur sous forme oxyde dans lequel le métal du groupe VIII est réparti de manière homogène.

2. Procédé selon la revendication 1 dans lequel l'enchainement des étapes d'imprégnation, de séchage et de calcination, dans cet ordre, est réalisé au moins 2 fois.

3. Procédé selon l'une des revendications 1 à 2 dans lequel ladite phase active comprend du cobalt.

4. Procédé selon la revendication 1 dans lequel ledit support oxyde est constitué de silice-alumine.

5. Procédé selon l'une des revendications 1 à 4 dans lequel le gaz utilisé dans ladite étape de séchage est de l'air, seul ou en mélange avec un gaz inerte.

**6.** Procédé selon l'une des revendications 1 à 5 dans lequel la température du gaz en entrée de ladite étape de séchage est comprise entre 300 et 800°C.

**7.** Procédé selon l'une des revendications 1 à 6 dans lequel ladite étape de calcination est réalisée dans un outil choisi parmi une étuve ventilée, un lit fluidisé et un four tournant.

**8.** Procédé selon l'une des revendications 1 à 7 dans lequel ledit procédé de préparation comprend une étape de stabilisation dudit support oxyde de manière à former une structure spinelle entre un métal choisi parmi le cobalt, le nickel, le magnésium, le calcium et le zinc et le support oxyde, ladite étape de stabilisation étant réalisée avant l'enchainement des étapes d'imprégnation, de séchage et de calcination, ladite étape de stabilisation dudit support oxyde consistant :

   - en l'imprégnation, de préférence à sec, dudit support oxyde, de manière préférée, par une solution aqueuse d'un ou plusieurs sels d'un métal choisi parmi le cobalt, le nickel, le magnésium, le calcium et le zinc de manière à imprégner une teneur en métal compris entre 1 et 10 % poids par rapport à la masse totale du catalyseur final,
   - le séchage dudit support oxyde imprégné,
   - la calcination dudit support oxyde imprégné et séché, ladite calcination étant réalisée en une étape, sous air, à une température comprise entre 700 et 1200°C, pendant une durée comprise entre une heureet 24h, ou en deux étapes, à une température comprise entre 300°C et 600°C sous air pendant une durée comprise entre une demi-heure et trois heures, puis à une température comprise entre 700°C et 1200°C, pendant une durée comprise entre une heure et 24 heures.

**9.** Procédé selon la revendication 8 dans lequel ledit support oxyde imprégné est entrainé au moyen d'un gaz dans ladite étape de séchage de l'étape de stabilisation, ledit support oxyde imprégné étant soumis à une rampe de montée en température comprise entre 250 et 500°C/min, le temps de séjour dudit support oxyde imprégné dans ladite étape de séchage étant compris entre 1 seconde et 1 minute.

**Patentansprüche**

**1.** Verfahren zur Herstellung eines Katalysators, umfassend eine Aktivphase, umfassend mindestens ein Metall der Gruppe VIII, ausgewählt unter Kobalt, Nickel, Ruthenium und Eisen, alleine oder im Gemisch, und einen Oxidträger, ausgewählt unter einem Aluminiumoxid oder einem Siliziumoxid-Aluminiumoxid, wobei das Verfahren zumindest einmal die Aneinanderreihung der folgenden Schritte umfasst:

   - eines Schrittes der Imprägnierung des Oxidträgers, wobei der Imprägnierungsschritt durch mindestens eine Lösung durchgeführt wird, die mindestens einen Vorläufer des Metalls der Gruppe VIII, ausgewählt unter Kobalt, Nickel, Ruthenium und Eisen, enthält,
   - eines Trocknungsschrittes, bei dem der imprägnierte Oxidträger mit Hilfe eines Gases angetrieben wird, wobei der imprägnierte Oxidträger in dem Schritt einer Temperaturanstiegsrampe zwischen 250 und 600 °C/min ausgesetzt wird, wobei die Aufenthaltszeit des imprägnierten Oxidträgers in dem Trocknungsschritt zwischen 1 Sekunde und 1 Minute beträgt,
   - eines Schrittes der Kalzinierung des imprägnierten und getrockneten Trägers, wobei der Kalzinierungsschritt bei einer Temperatur zwischen 320 °C und 460 °C und während einer Dauer zwischen 15 min und 15 h durchgeführt wird,

   um einen Katalysator in Oxidform zu erhalten, bei dem das Metall der Gruppe VIII homogen verteilt ist.

**2.** Verfahren nach Anspruch 1, bei dem die Aneinanderreihung der Schritte der Imprägnierung, der Trocknung und der Kalzinierung in dieser Reihenfolge mindestens zweimal durchgeführt wird.

**3.** Verfahren nach einem der Ansprüche 1 bis 2, bei dem die Aktivphase Kobalt umfasst.

**4.** Verfahren nach Anspruch 1, bei dem der Oxidträger von Siliziumoxid-Aluminiumoxid gebildet ist.

**5.** Verfahren nach einem der Ansprüche 1 bis 4, bei dem das in dem Trocknungsschritt verwendete Gas Luft alleine oder im Gemisch mit inertem Gas ist.

**6.** Verfahren nach einem der Ansprüche 1 bis 5, bei dem die Temperatur des Gases am Eingang des Trocknungsschrittes zwischen 300 und 800 °C beträgt.

**7.** Verfahren nach einem der Ansprüche 1 bis 6, bei dem der Kalzinierungsschritt in einem Werkzeug erfolgt, das unter einem Ofen mit Ventilator, einen Fließbett oder einem Drehrohrofen ausgewählt ist.

**8.** Verfahren nach einem der Ansprüche 1 bis 7, wobei das Herstellungsverfahren einen Schritt der Stabilisierung des Oxidträgers umfasst, um eine Spinellstruktur zwischen einem Metall, ausgewählt unter Kobalt, Nickel, Magnesium, Kalzium und Zink, und dem Oxidträger zu bilden, wobei der Stabilisierungsschritt vor der Aneinanderreihung der Schritte der Imprägnierung, der Trocknung und der Kalzinierung durchgeführt wird, wobei der Schritt der Stabilisierung des Oxidträgers besteht in:

- der Imprägnierung, vorzugsweise Trockenimprägnierung, des Oxidträgers, auf bevorzugte Weise durch eine wässrige Lösung eines oder mehrerer Salze eines Metalls, ausgewählt unter Kobalt, Nickel, Magnesium, Kalzium und Zink, um einen Metallgehalt zwischen 1 und 10 Gew.-% bezogen auf die Gesamtmasse des endgültigen Katalysators zu imprägnieren,
- der Trocknung des imprägnierten Oxidträgers,
- der Kalzinierung des imprägnierten und getrockneten Oxidträgers, wobei die Kalzinierung in einem Schritt bei Luft bei einer Temperatur zwischen 700 und 1200 °C während einer Dauer zwischen einer Stunde und 24 h oder in zwei Schritten bei einer Temperatur zwischen 300 °C und 600 °C bei Luft während einer Dauer zwischen einer halben Stunde und drei Stunden, dann bei einer Temperatur zwischen 700 °C und 1200 °C während einer Dauer zwischen einer Stunde und 24 Stunden durchgeführt wird.

**9.** Verfahren nach Anspruch 8, bei dem der imprägnierte Oxidträger mit Hilfe eines Gases in dem Trocknungsschritt des Stabilisierungsschrittes angetrieben wird, wobei der imprägnierte Oxidträger einer Temperaturanstiegsrampe zwischen 250 und 500 °C/min ausgesetzt wird, wobei die Aufenthaltszeit des imprägnierten Oxidträgers in dem Trocknungsschritt zwischen 1 Sekunde und 1 Minute beträgt.

**Claims**

**1.** A process for the preparation of a catalyst comprising an active phase comprising at least one metal from group VIII selected from cobalt, nickel, ruthenium and iron, alone or as a mixture, and an oxide support selected from alumina or silica-alumina, said process comprising at least the linked sequence of the following stages:

- a stage for impregnation of said oxide support, said stage for impregnation being realised by at least one solution containing at least one precursor of said metal of group VIII selected from cobalt, nickel, ruthenium and iron,
- a rapid drying stage in which said impregnated oxide support is entrained by means of a gas, said impregnated oxide support being subjected in said stage to a temperature rise ramp of between 250 and 600°C/min, the residence time of said impregnated oxide support in said drying stage being between 1 second and 1 minute, and
- a stage for calcination of said impregnated and dried oxide support, said stage for calcination being realised at a temperature comprised between 320 and 460 °C, and for a period of between 15 minutes and 15 hours,

in order to obtain a catalyst in oxide form in which the metal of group VIII is homogeneously distributed.

**2.** A process according to claim 1 wherein the linked sequence of the impregnation, drying and calcination stages, in that order, is performed at least twice.

**3.** A process according to one of claims 1 to 2 wherein said active phase comprises cobalt.

**4.** A process according to claim 1 wherein said oxide support is formed by silica-alumina.

**5.** A process according to one of claims 1 to 4 wherein the gas used in said drying stage is air alone or mixed with an inert gas.

6. A process according to one of claims 1 to 5 wherein the temperature of the gas at the entry to said drying stage is between 300 and 800°C.

7. A process according to one of claims 1 to 6 wherein said calcination stage is carried out in an apparatus selected from a ventilated drying cabinet, a fluidised bed and a rotating furnace.

8. A process according to one of claims 1 to 7 wherein said preparation process comprises a stage for stabilisation of said oxide support in order to form a spinel structure between a metal selected from cobalt, nickel, magnesium, calcium and zinc and the oxide support, said stabilisation stage being carried out prior to the linked sequence of the impregnation, drying and calcination stages, said stage for stabilisation of said oxide support consisting of:

   - impregnation, preferably dry, of said oxide support, preferably by an aqueous solution of one or salts of a metal selected from cobalt, nickel, magnesium, calcium and zinc so as to impregnate a content of metal of between 1 and 10% by weight with respect to the total mass of the final catalyst,
   - drying of said impregnated oxide support, and
   - calcination of said dried impregnated oxide support, said calcination operation being performed in one stage in air at a temperature of between 700 and 1200°C, for a period of between 1 hour and 24 h, or in two stages at a temperature of between 300°C and 600°C in air for a period between half an hour and 3 hours, then at a temperature between 700°C and 1200°C, for a period of between 1 hour and 24 hours.

9. A process according to claim 8 wherein said impregnated oxide support is entrained by means of a gas in said drying stage of the stabilisation stage, said impregnated oxide support being subjected to a temperature rise ramp of between 250 and 500°C/min, the residence time of said impregnated oxide support in said drying stage being between 1 second and 1 minute.

Figure 1a

Figure 1b

Figure 2a

Figure 2b

Figure 3a

Figure 3b

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6806226 B
- WO 2007071899 A1

- EP 2407237 A

**Littérature non-brevet citée dans la description**

- *J. Catal,* 1984, vol. 85, 63-77